# EUROPÄISCHE PATENTSCHRIFT

(11) **EP 2 396 222 B1**
(45) Veröffentlichungstag und Bekanntmachung des Hinweises auf die Patenterteilung: **31.08.2016**
(21) Anmeldenummer: 10702680.9
(22) Anmeldetag: 04.02.2010
(51) Int. Cl.: B63B 27/22, B64D 9/00, B63B 27/00

(54) **MODULARES ADAPTIVES ELEKTRISCHES FRACHTLADESYSTEM**
MODULAR ADAPTIVE ELECTRICAL FREIGHT LOADING SYSTEM
SYSTÈME ÉLECTRIQUE, MODULAIRE ET ADAPTATIF DE CHARGEMENT DU FRET

(30) Priorität: 10.02.2009 DE 102009008187; 10.02.2009 US 151257 P
(43) Veröffentlichungstag der Anmeldung: 21.12.2011
(73) Patentinhaber: Airbus Operations GmbH, 21129 Hamburg (DE)
(72) Erfinder: SCHNÖRWANGEN, Bernd, 28857 Syke-Gessel (DE); HASBACH, Volker, 26131 Oldenburg (DE)
(74) Vertreter: Kopf Westenberger Wachenhausen Patentanwälte PartG mbB
(86) Internationale Anmeldenummer: PCT/EP2010/051385
(87) Internationale Veröffentlichungsnummer: WO 2010/092000

(56) Entgegenhaltungen:
- WO-A1-01/28894
- DE-A1- 19 756 875
- DE-A1- 19 947 739
- DE-A1-102005 026 898
- GB-A- 2 443 554
- US-A- 4 446 524
- US-A1- 2009 028 677

## Beschreibung

Die vorliegende Anmeldung beansprucht die Priorität der US-Provisional Application 61/151,257, eingereicht am 10. Februar 2009 und der deutschen Patentanmeldung 10 2009 008 187.9 , eingereicht am 10. Februar 2009.

### Gebiet der Erfindung

Die Erfindung betrifft das Laden eines Frachtraums eines Transportmittels mit Fracht. Insbesondere betrifft die Erfindung ein Frachtladesystem für ein Luftfahrzeug. Ferner betrifft die Erfindung ein Transportmittel sowie ein Luftfahrzeug mit einem Frachtladesystem und ein Verfahren zum Laden eines Frachtraumes eines Transportmittels mit Fracht.

### Hintergrund der Erfindung

Beim Beladen eines Frachtraums eines Luftfahrzeugs mit Fracht können Hauptdeck (Maindeck=MD) Frachtladesysteme verwendet werden, wobei zur Bedienbarkeit jeweils links und rechts im Frachtraum mehrere Bedienpanel eingebaut sind. Bei einem derartigen Frachtladesystem ist die Position des Bedienpersonals fix, das heißt, dass die Bedienung der einzelnen Panels bzw. Bedieneinheiten auf bestimmte Stellplätze im Frachtraum bezogen ist. Ein derartiges MD Frachtladesystem kann mehrere unterschiedliche Bedieneinheiten zum Beladen des Frachtraums eines Flugzeugs umfassen.

Bei der Bedienung der an einer definierten Position im Frachtraum angeordneten Paneele während des Be- und Entladevorgangs ist ein geringer, fest definierter Platz für das Bedienpersonal an der jeweiligen Beladeposition vorhanden.

Aus der US 2006 186 271 und (161 DE 10 2005 008 443 ist eine Ladevorrichtung zum teilautomatischen Beladen und Entladen eines Frachtraums eines Verkehrsmittels, insbesondere eines Frachtraums eines Luftahrzeugs bekannt.

Aus der GB 2 443 554 geht ebenfalls ein Frachtladesystem hervor und wird als nächstliegender Stand der Technik angesehen. Hier wird ein Frachtladesystem beschrieben, dass durch mehre Antriebseinheiten bewegt wird und ebenfalls über eine Kontrollbedieneinheit angesteuert wird.

### Zusammenfassung der Erfindung

Es kann als Aufgabe der Erfindung angesehen werden, ein sicheres und verbessertes Laden eines Transportmittels mit Fracht zu ermöglichen.

Es sind ein Frachtladesystem gemäß den Merkmalen des Anspruchs 1, ein Transportmittel mit einem Frachtladesystem gemäß den Merkmalen des Anspruchs 12 und ein Verfahren mit einem Frachtladesystem gemäß den Merkmalen des Anspruchs 14 angegeben Weiterbildungen der Erfindung werden durch die abhängigen Ansprüche verkörpert.

Erfindungsgemäß wird ein Frachtladesystem für ein Transportmittel mit einer Kraftantriebseinheit zum Bewegen von Fracht in einem Frachtraum eines Transportmittels und einer Kontrollbedieneinheit bereitgestellt. Die Kontrollbedieneinheit ist zum Steuern der gesamten Bewegung der Fracht durch die Kraftantriebseinheit ausgeführt.

Ein derartiges Frachtladesystem erhöht die Flexibilität des Beladepersonals, das die Kontrollbedieneinheit im Frachtabteil (Cargo Compartment = CC) eines Frachtraums bedient, da mehrere unterschiedliche Bedieneinheiten sowie Fracht-Kontrollboxen für Sektoren zum Bedienen und Steuern von Fracht transportierenden Kraftantriebseinheiten entfallen können.

Des Weiteren wird bei einem derartigen Frachtladesystem eine Reduzierung der Wartungskosten ermöglicht durch die Reduzierung der Bedieneinheiten von Fracht transportierenden Kraftantriebseinheiten wie den lokalen Bedieneinheiten, Kontrollboxen und der Verkabelung.

Ferner ist eine Zeiteinsparung beim Be- und Entladen der Fracht durch ein derartiges oben genanntes Frachtladesystem realisierbar, da alle Frachtladevorgänge vom Beladen bis zum Entladen der Fracht durch eine Kontrollbedieneinheit ausführbar sind.

Des Weiteren wird bei einem derartigen Ladesystem die Verkabelung durch die Zusammenfassung vieler unterschiedlicher Bedieneinheiten in eine Kontrollbedieneinheit reduziert, wodurch eine Gewichteinsparung realisiert werden kann.

Ein derartiges Ladesystem ermöglicht es ferner, dass die Flexibilität des Beladepersonals erhöht wird, da die Beladeprozedur nicht unterbrochen werden muss, um die Position zu wechseln. Das Beladepersonal kann die Fracht bis zur Endposition fahren und zeitnah verriegeln. Durch die Reduktion der Anzahl an fest installierten Bedieneinheiten zu einer tragbaren und drahtlosen Kontrollbedieneinheit wird die Bewegungsmöglichkeit des Beladepersonals erhöht sowie der bisher hohe Verkabelungsaufwand hinsichtlich vorhandener Kontrollbedieneinheiten und Antriebsenergieversorgung reduziert, was wiederum eine Gewichtseinsparung zur Folge hat.

Ein derartiges oben genanntes Frachtladesystem ermöglicht weiterhin die flexible Konfigurierbarkeit des Ladesystems durch die Authentifizierung der Kontrollbedieneinheit und damit die Zuordnung für das jeweilige Frachtabteil (Cargo Compartment) des Frachtraums und das zu beladende Flugzeug.

Gemäß einem weiteren Ausführungsbeispiel der Erfindung weist das Frachtladesystem weiterhin eine Mehrzahl an Kraftantriebseinheiten auf, wobei die Kontrollbedieneinheit zum Steuern aller oder von mehreren bestimmten Kraftantriebseinheiten ausgeführt ist.

Gemäß einer weiteren beispielhaften Ausführung der Erfindung ist die Kontrollbedieneinheit relativ zu dem Frachtraum beweglich.

Eine derartige frei bewegliche Kontrollbedieneinheit erhöht die Flexibilität des Bedienpersonals, da sich das Bedienpersonal somit frei überall im Frachtraum bewegen kann und es gleichzeitig die Kraftantriebseinheiten zum Bewegen der Fracht von überall her bedienen kann.

Gemäß einem weiteren Ausführungsbeispiel der Erfindung ist die Kontrollbedieneinheit zur drahtlosen Übermittlung von Befehlen zum Steuern der Kraftantriebseinheit an die Kraftantriebseinheit ausgeführt.

Gemäß einem weiteren Ausführungsbeispiel der Erfindung ist die Kontrollbedieneinheit zur drahtlosen Übermittlung von Befehlen zum Steuern der Kraftantriebseinheit an eine Steuereinheit ausgeführt.

Gemäß einem weiteren Ausführungsbeispiel der Erfindung ist die Kontrollbedieneinheit zur drahtlosen Übermittlung von Befehlen zum Steuern der Kraftantriebseinheit an eine Konfigurationseinheit ausgeführt.

Eine derartige drahtlose Übermittlung von Befehlen ermöglicht eine Reduzierung der Verkabelung innerhalb des Frachtraumes und damit eine Reduzierung des Gewichts des Transportmittels.

Die oben erwähnte Übermittlung von Befehlen kann auch nicht drahtlos, beispielsweise durch Leitungen erfolgen.

Erfindungsgemäß wird ein Frachtladesystem mit einer Ladeeinheit bereitgestellt, wobei die Kontrollbedieneinheit derart ausgeführt ist, dass sie sich über die Ladeeinheit für den Frachtraum konfiguriert. Dabei kann die Ladeeinheit der Kontrollbedieneinheit beispielsweise mitteilen, für welchen Bedienbereich (Flugzeug, Frachtraum, linke Spur / rechte Spur / Einfahrbereich am Frachttor) die Kontrolleinheit zuständig ist.

Die Kontrollbedieneinheit eines derartigen Frachtladesystems kann dabei zum Konfigurieren der Kontrollbedieneinheit für ein bestimmtes Transportmittel mit einer bestimmten zu beladenden Fracht an die Ladeeinheit gekoppelt sein. Die Kopplung kann beispielsweise als induktive Kopplung, als Steckverbindung, als drahtlose Kopplung, beispielsweise mit Blue Tooth Technologie, oder als Magnetkopplung ausgeführt sein. Dabei kann die Datenübertragung durch "Handshaking" (ein Hardwareverfahren zur Datenflusskontrolle) über Steuerleitungen übertragen werden. Die Kontrollbedieneinheit kann für die Verwendung für mehrere Transportmittel konfiguriert werden.

Ferner kann die Ladeeinheit zum Versorgen der Kontrollbedieneinheit mit Energie ausgeführt sein.

Gemäß einem weiteren Ausführungsbeispiel der Erfindung ist ein Frachtladesystem mit einer Konfigurationseinheit bereitgestellt, wobei die Konfigurationseinheit mit der Kontrollbedieneinheit zum Konfigurieren der Kommunikation zur Steuerung der Kraftantriebseinheit(en) koppelbar ausgeführt ist.

Gemäß einem weiteren Ausführungsbeispiel der Erfindung weist das Frachtladesystem weiterhin eine Steuereinheit auf, die mit der Kraftantriebseinheit verbunden ist, wobei die Steuereinheit zur Kommunikation mit der Kontrollbedieneinheit zur Übermittlung von Steuerbefehlen für die Kraftantriebseinheit ausgeführt ist.

Ferner kann eine Reduzierung der Verkabelung bzw. des Gewichts in dem Transportmittel erreicht werden durch eine zentrale Kontrollbox bzw. Steuereinheit für die Steuerung und die Schnittstellen zum Bordfunktionerhaltungssystem (On Board Maintenance System=OMS), zum Frachtauswertungssystem (Cargo Evaluation System=CES) und zur Endmontagelinie (Final Assembly Line=FAL). Für Hauptdeckanwendungen ist ein Entfallen bzw. eine Reduzierung der lokalen Steuereinheiten durch drahtlose Steuereinheiten möglich.

Gemäß einem weiteren Ausführungsbeispiel der Erfindung weist das Frachtladesystem eine Antenne auf, wobei die Kontrollbedieneinheit zur Übermittlung von Informationen zum Bedienen der Kraftantriebseinheit an die Antenne in dem Frachtraum ausgeführt ist, wobei die Antenne zum Übermitteln dieser Informationen über die Ladeeinheit an die Steuereinheit ausgeführt ist, und wobei die Steuereinheit zum Übermitteln dieser Informationen an die Kraftantriebseinheit ausgeführt ist. Dabei kann die Ladeeinheit zum Übermitteln der Informationen über ein Bussystem an die Steuereinheit ausgeführt sein. Das Übermitteln kann dabei als drahtloses Übermitteln ausgeführt sein.

Auch können mehrere solche Antennen vorgesehen sein. Mit Hilfe der entsprechend verteilten Antennen kann sichergestellt werden, dass die Kommunikationsverbindung zwischen den Kontrollbedieneinheiten und der Steuereinheit bzw. der Kraftantriebseinheit stets sichergestellt ist.

Gemäß einem weiteren Ausführungsbeispiel der Erfindung ist die Kontrolleinheit zur Übermittlung von Informationen zum Bedienen der Kraftantriebseinheit an die Antenne in dem Frachtraum ausgeführt ist, wobei die Antenne zum Übermitteln dieser Informationen an die Steuereinheit ausgeführt ist, und wobei die Steuereinheit zum Übermitteln dieser Informationen an die Kraftantriebseinheit ausgeführt ist.

Gemäß einem weiteren Ausführungsbeispiel der Erfindung weist das Frachtladesystem einen Datenbus auf, wobei die Kraftantriebseinheit mit der Steuereinheit mittels des Datenbusses gekoppelt ist.

Gemäß einem weiteren Ausführungsbeispiel der Erfindung ist der Datenbus als Controller Area Network (CAN)-Bus ausgeführt. Ein CAN-Bus ist ein asynchrones, serielles Bussystem zur Vernetzung von Steuergeräten in Transportmitteln um Kabelbäume zu reduzieren und dadurch Gewicht zu sparen.

Ein derartiges Frachtladesystem mit einem Datenbus ermöglicht es, dass das System beliebig erweiterbar und konfigurierbar ist, da die Kraftantriebseinheiten an den Datenbus angebunden sind, wobei der Datenbus wiederum an die Steuereinheit angebunden ist.

Ein derartiges Frachtladesystem ermöglicht ferner, dass das Frachtladesystem durch die Busstruktur unabhängig von den limitierten Pins an vorhandenen Steckern ist. Ferner ist ein derartiges oben erwähntes Ladesystem durch die Anbindung der Kraftantriebseinheiten über einen CAN-Bus flexibel erweiterbar.

Gemäß einem weiteren Ausführungsbeispiel der Erfindung ist die Steuereinheit als zentrale Energieversorgungseinheit zur Energieversorgung der Kraftantriebseinheiten ausgeführt.

Eine derartige Energieversorgung der Kraftantriebseinheiten erfolgt durch 270 V DC, wobei diese Spannung für jede Kraftantriebseinheit (Power Drive Unit=PDU) in der Steuereinheit aus z.B. 3 x 115 VAC mit einer Frequenz von 400 Hz von einer Hauptenergieversorgung des Transportmittels (Secondary Power Distribution Box / Solid State Power Control = SPDB / SSPC) zentral bereitgestellt wird. Gleichzeitig beinhaltet die Steuereinheit die zentrale Energiefaktorkorrektur (Power Factor Correction) für das Gesamtsystem. Die interne Spannungsversorgung für die Steuerelektronik der Kraftantriebseinheit erfolgt aus der 270 VDC.

Gemäß einem weiteren Ausführungsbeispiel der Erfindung ist die Steuereinheit mit der Hauptenergieversorgung, der Kraftantriebseinheit, der Ladeeinheit und der Kontrollbedieneinheit gekoppelt.

Gemäß einem weiteren Ausführungsbeispiel der Erfindung sind sämtliche innerhalb des Frachtraums vorgesehene Kraftantriebseinheiten durch eine einzelne Kontrollbedieneinheit steuerbar. Dabei kann die Kopplung beispielsweise durch Leitungen oder drahtlos ausgeführt sein.

Gemäß einem weiteren Ausführungsbeispiel der Erfindung ist der Frachtraum in zwei Hälften einteilbar, die zum Beispiel beidseitig einer Mittellinie entlang eines Frachtraumbodens in Frachtraum-Längsrichtung angeordnet sind, wobei jeweils eine Kontrollbedieneinheit den in jeweils einer Hälfte des Frachtraums befindlichen Kraftantriebseinheiten zugeordnet ist. Die Grenze zwischen den beiden Bereichen kann auch an einer anderen Stelle verlaufen.

Gemäß einem weiteren Ausführungsbeispiel der Erfindung ist die Steuereinheit eingangsseitig für Wechselspannung und Gleichspannung ausgelegt und stellt ausgangsseitig zur Stromversorgung der Kraftantriebseinheiten Gleichspannung bereit, die höher ist als die Eingangs-Wechselspannung.

Gemäß einem weiteren Ausführungsbeispiel der Erfindung ist ein Transportmittel mit einem Frachtladesystem nach einem der vorhergehenden Ausführungsbeispiele bereitgestellt.

Gemäß einem weiteren Ausführungsbeispiel der Erfindung ist das Transportmittel ein Luftfahrzeug, beispielsweise ein Transportflugzeug oder ein Passagierflugzeug. Bei dem Transportmittel kann es sich aber auch um ein Wasserfahrzeug, ein Schienenfahrzeug oder ein Straßenfahrzeug handeln.

Gemäß einem weiteren Ausführungsbeispiel der Erfindung wird ein Verfahren zum Laden eines Frachtraums eines Transportmittels mit Fracht bereitgestellt, bei dem ein Steuern der gesamten Bewegung der Fracht in einem Frachtraum eines Transportmittels mit einer Kraftantriebseinheit zum Bewegen der Fracht durch eine Kontrollbedieneinheit erfolgt.

Gemäß einem weiteren Ausführungsbeispiel der Erfindung weist das Verfahren zum Laden des Frachtraums des Transportmittels mit Fracht weiterhin folgende Schritte auf: Ein Senden eines Befehls zum Steuern der Kraftantriebseinheit(en) zum Bewegen von Fracht an eine Steuereinheit durch eine Kontrollbedieneinheit; ein Senden der Befehle zum Steuern der Kraftantriebseinheit(en) zum Bewegen der Fracht an die jeweilige(n) Kraftantriebseinheit(en); ein Bewegen der Fracht gemäß des gesendeten Befehls zur Steuerung der Kraftantriebseinheit(en) durch die Kraftantriebseinheit(en).

Die einzelnen Merkmale der verschiedenen Ausführungsbeispiele können selbstverständlich auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Es ist insbesondere zu beachten, dass die hier und im Folgenden im Hinblick auf das Frachtladesystem beschriebenen Merkmale auch in dem Verfahren, dem Transportmittel und dem Luftfahrzeug implementierbar sind und umgekehrt.

Diese und andere Aspekte der Erfindung werden auf die Bezugnahme auf die hiernach beschriebenen beispielhaften Ausführungsformen erläutert und verdeutlicht.

### Kurze Beschreibung der Zeichnungen

- **Fig. 1**: zeigt eine schematische Darstellung eines Frachtladesystems für ein Flugzeug.
- **Fig. 2**: zeigt eine schematische Darstellung eines Frachtladesystems für ein Transportmittel gemäß einem Ausführungsbeispiel der Erfindung.
- **Fig. 3**: zeigt eine weitere schematische Darstellung eines Ladesystems für Transportmittel gemäß einem Ausführungsbeispiel der Erfindung.
- **Fig. 4**: zeigt ein Luftfahrzeug mit einem Frachtladesystem gemäß einem Ausführungsbeispiel der Erfindung.
- **Fig. 5**: zeigt ein Flussdiagramm eines Verfahrens zum Laden eines Frachtraums eines Transportmittels mit Fracht gemäß einem Ausführungsbeispiel der Erfindung.

### Detaillierte Beschreibung beispielhafter Ausführungsformen

Im Folgenden werden unter Bezugnahme auf die beigefügten Zeichnungen Ausführungsbeispiele der Erfindung beschrieben.

Die Darstellungen in den Figuren sind schematisch und nicht maßstäblich. In den folgenden Figurenbeschreibungen werden für gleiche oder ähnliche Elemente die gleichen Bezugszeichen verwendet.

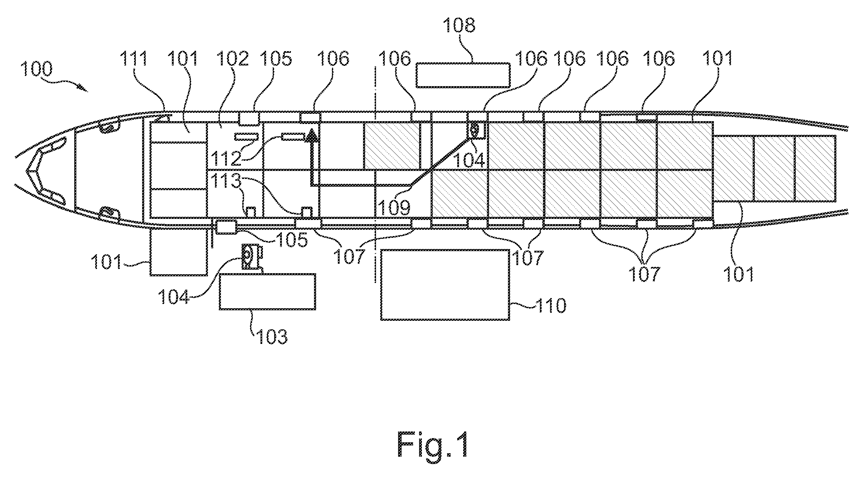

Fig. 1 zeigt ein Frachtladesystem für ein Transportmittel, insbesondere für ein Frachtladesystem eines Flugzeugs 100 mit einem Frachtraum 111. Ein derartiges Frachtladesystem wird als Hauptdeck-Elektrisches-Frachtladesystem (Maindeck Electrical Cargo Loading System=MD ECLS) bezeichnet und weist folgende Komponenten auf, die als fest installierte Einheiten ausgeführt sind:
Hauptbedieneinheiten im Frachttürbereich 104 (MCP: Main Control Panel), zusätzliche Hauptbedieneinheit zur Beladung sperriger Güter 105 (RCP: Remote Control Panel), lokale Bedieneinheiten, rechts im Frachtraum 106 (LCPR: Local Control Panel Right Side), lokale Bedieneinheiten, links im Frachtraum 107 (LCPL: Local Control Panel Left Side), Antriebe zur Frachtbeförderung auf dem Frachtraumboden 112 (PDU: Power Drive Unit) und Cargo Control Boxen für die Sektoren 113 (CCB: Cargo Control Box). In dieser Konfiguration ist pro Stellplatz 102 circa eine Bedieneinheit 106,107 notwendig. Die Beladung mit Frachteinheiten 101 erfolgt aufgrund einer Zwei-Mann-Beladung (Operator 1, 103 und Operator 2, 108) wechselweise, zum Beispiel links, rechts bzw. rechts, links. Ein Übergeben der Fracht vom Transitgebiet zum Längsbereich des Luftfahrzeugs 110 erfolgt auf der linken bzw. rechten Seite des Frachtraums bzw. des Flugzeugs. Die Hauptbedieneinheiten 104 sind beispielsweise zum Steuern 109 der Lokalbedieneinheiten 106 ausgeführt.

Die Antriebe (Motoren) zur Frachtbeförderung auf dem Frachtraumboden 112 werden durch 3 x 115 VAC mit einer Frequenz von 400 Hz versorgt. 28 VDC wird jeweils für die Spannungsversorgung der Kontrolleinheiten verwendet.

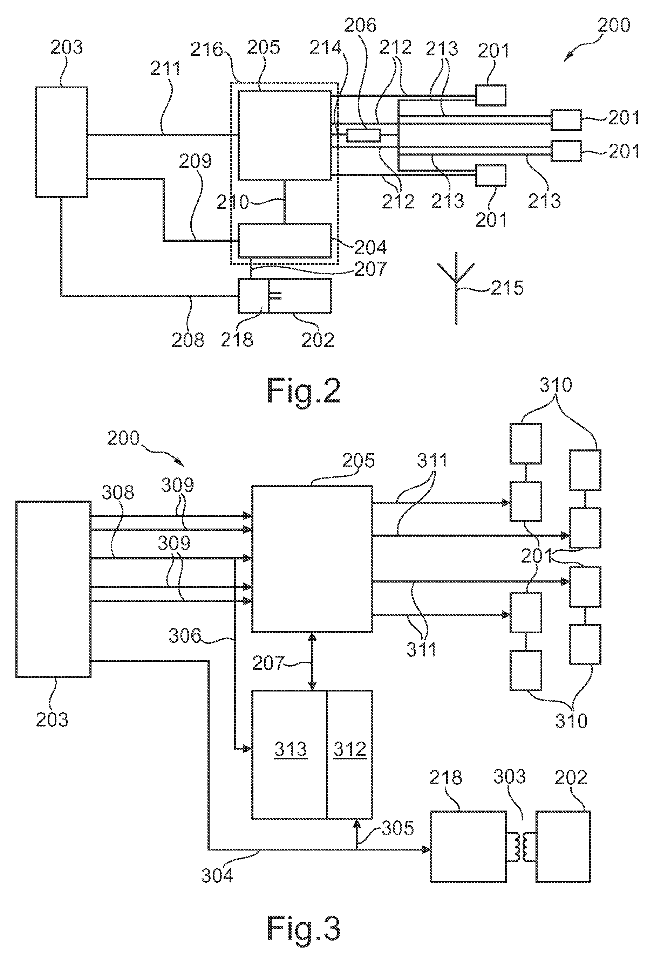

Fig. 2 zeigt ein Frachtladesystem 200 für ein Transportmittel mit mehreren Kraftantriebseinheiten 201 zum Bewegen von Fracht in einem Frachtraum 111 eines Transportmittels, und mit einer Kontrollbedieneinheit 202 zum Steuern der gesamten Bewegung der Fracht durch die Kraftantriebseinheiten 201 sowie einer Hauptenergieversorgung des Transportmittels (SPDB/SSPC) 203, einer Ladeeinheit 218, wobei die Kontrollbedieneinheit 202 derart ausgeführt ist, dass sie sich über die Ladeeinheit 218 für den Frachtraum 111 konfiguriert, das bedeutet, dass die Ladeeinheit 218 der Kontrollbedieneinheit 202 beispielsweise mitteilt, für welchen Bedienbereich (Flugzeug, Frachtraum, linke Spur / rechte Spur / Einfahrbereich am Frachttor) die Kontrolleinheit zuständig ist. Die Kontrollbedieneinheit 202 ist an das Ladesystem 218 anschließbar und kann von dem Ladesystem 218 mit Energie versorgt werden.

Ferner weist das Frachtladesystem 200 eine Konfigurationseinheit 204 auf, die mit der Kontrollbedieneinheit 202 zum Konfigurieren der Kommunikation zur Steuerung der Kraftantriebseinheit 201 koppelbar ausgeführt.

Ferner weist das Frachtladesystem 200 gemäß Fig. 1 eine Steuereinheit 205 auf, die mit der Kraftantriebseinheit 201 verbunden ist, wobei die Steuereinheit 205 zur Kommunikation mit der Kontrollbedieneinheit 202 zur Übermittlung von Steuerbefehlen für die Kraftantriebseinheit 201 ausgeführt ist. Das Frachtladesystem weist dabei mehrere Kraftantriebseinheiten 201 auf, die über die Steuereinheit 205 mit Energie versorgt werden, welche Energie von der Hauptenergieversorgung des Transportmittels (SPDB/SSPC) 203 über eine Leitung 211 an die Steuereinheit 205 abgegeben wird. Die Energieversorgung der Kraftantriebseinheiten 201 erfolgt dabei über Leitungen 212.

Das Frachtladesystem 200 gemäß Fig. 1 weist weiterhin wenigstens eine Antenne 215 auf, wobei die Kontrollbedieneinheit 202 zur drahtlosen Übermittlung von Informationen zum Bedienen der Kraftantriebseinheit 201 an die Antenne 215 in dem Frachtraum 111 ausgeführt ist. Die Antenne 215 ist zur drahtlosen Übermittlung dieser Information an die Ladeeinheit 218 ausgeführt. Die Ladeeinheit 218 ist zur Übermittlung dieser Informationen über ein Bussystem 207 an die Steuereinheit 205 ausgeführt. Die Steuereinheit 205 ist zur Übermittlung dieser Informationen über ein Bussystem 206 an die Kraftantriebseinheiten 201 ausgeführt.

Ferner weist das Frachtladesystem 200 gemäß Fig. 1 einen Datenbus 206 auf, der über eine Leitung 214 mit der Steuereinheit 205 verbunden ist. Der Datenbus 206 ist mit den Kraftantriebseinheiten 201 über Leitungen 213 gekoppelt und leitet Signale zur Steuerung der Kraftantriebseinheiten 201 von der Steuereinheit 205 über den Datenbus 206 an die Kraftantriebseinheiten 201 weiter.

Die Hauptenergieversorgung des Transportmittels 203 versorgt die Ladeeinheit 218 und damit die Kontrollbedieneinheit 202 über eine Leitung 208 mit Energie. Die Hauptenergieversorgung 203 versorgt ferner die Konfigurationseinheit 204 über eine Leitung 209 mit Energie und die Steuereinheit 205 über eine Leitung 211 mit Energie.

Die Kontrollbedieneinheit 202 kann zum Senden von Informationen zum Steuern der Kraftantriebseinheiten 201 mit der Konfigurationseinheit 204 verbunden sein. Die Konfigurationseinheit 204 ist über eine Leitung 210 mit der Steuereinheit 205 verbunden. Die Konfigurationseinheit 204 und die Steuereinheit 205 können miteinander integriert als Hauptsteuereinheit 216 ausgeführt sein.

Fig. 3 zeigt ein Frachtladesystem 200 gemäß einem weiteren Ausführungsbeispiel der Erfindung mit einer Kontrollbedieneinheit 202, die als drahtlose Fernsteuerungsbedieneinheit (Remote Control Panel=RCP) ausgeführt ist, und ein über eine Kopplung 303 gekoppeltes Ladesystem 218, das als Ladekontrollbedieneinheit (Charging Control Panel=CCP) ausgeführt ist. Ein Energieversorgungssystem (SPDB/SSPC) (203) versorgt die Kontrollbedieneinheit 202 über die Ladeeinheit 218 mit einer Spannung von 28 VDC, die flugaktiv über eine Leitung 304 bereitgestellt wird.

Die Ladeeinheit 218 ist über eine Leitung 305 zur Spannungsversorgung (flugaktiv) mit einem Bordwartungssystem (On Board Maintenance System=OMS) 312 verbunden. Das Bordwartungssystem 312 ist mit einer Kontrollbox (Control Box) 313 integriert ausgeführt.

Die Kontrollbox 313 ist über eine Leitung 306/308 mit einer Spannung von 28 VDC Flugzeug Leistung (Aircraft Power) von der Hauptenergieversorgung 203 versorgt. Die Kontrollbox 313 ist über eine Leitung 207, die einen Informationsaustausch mit einer Steuereinheit 205 gewährleistet, mit einer Steuereinheit 205 verbunden. Die Kontrollbox 313 ist über ein Bus-System (nicht dargestellt) mit der Kontrollbedieneinheit 202 sowie den Kraftantriebseinheiten 201 beispielsweise drahtlos verbunden und unterstützt die Steuerung der Kraftantriebseinheiten 201.

Die Steuereinheit 205 wird über Leitungen 309 mit Energie in Form von Wechselspannung in Höhe von 115 VAC Flugzeugenergie (Aircraft Power) sowie über eine Leitung 308 mit Energie in Form von Gleichspannung in Höhe von 28 VDC Flugzeugenergie (Aircraft Power) von der Hauptenergieversorgung 203 versorgt. Die Steuereinheit 205 versorgt die Kraftantriebseinheiten 201 (PDU: Power Drive Units) mit einer Spannung von 270 VDC über Leitungen 311. Jede Kraftantriebseinheit 201 ist jeweils mit einem Schalter (Proxy) 310 verbunden, welcher die Energieversorgung einer Kraftantriebseinheit 201 nach Abschluss des Verriegelns der zur Kraftantriebseinheit 201 zugehörigen Frachteinheit unterbindet.

Die Funktionsweise des Frachtladesystems 200 gemäß Fig. 2 entspricht im Wesentlichen der Funktionsweise des Frachtladesystems 200 gemäß Fig. 1.

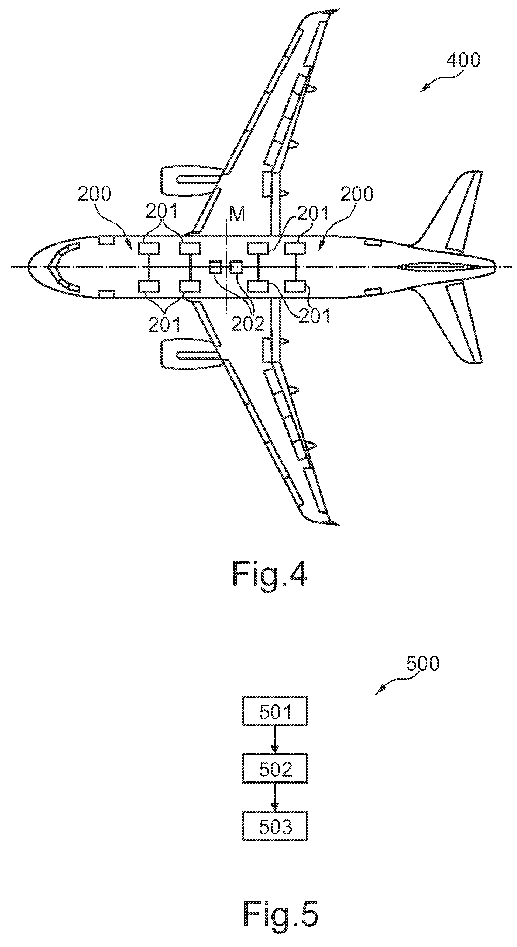

Fig. 4 zeigt ein Transportmittel, insbesondere ein Luftfahrzeug 400 mit jeweils einem Frachtladesystem 200 auf der linken Seite von einer Mittellinie M, die den Frachtraum des Luftfahrzeugs entlang eines Frachtraumbodens in Frachtraumlängsrichtung trennt, und einem rechtsseitig von der Mittellinie M angeordneten Frachtladesystem 200. Jedes der beiden Frachtladesysteme 200 weist Kraftantriebseinheiten 201 zum Bewegen von Fracht in einem Frachtraum des Luftfahrzeugs 400 und jeweils eine Kontrollbedieneinheit 202 auf, wobei die Kontrollbedieneinheit 202 zum Steuern der gesamten Bewegung der Fracht in der jeweils durch die Mittellinie M getrennten Frachtseite des Frachtraums durch eine Kraftantriebseinheit 201 ausgeführt ist.

Fig. 5 zeigt ein Flussdiagramm eines Verfahrens zum Laden eines Frachtraumes eines Transportmittels mit Fracht gemäß einem Ausführungsbeispiel der Erfindung, bei welchem ein Steuern der gesamten Bewegung der Fracht in einem Frachtraum eines Transportmittels mit einer Kraftantriebseinheit 201 zum Bewegen der Fracht durch eine Kontrollbedieneinheit 202, 500 erfolgt.

Das Verfahren 500 weist die folgenden Schritte auf: In Schritt 501 erfolgt ein Senden eines Befehls zum Steuern der Kraftantriebseinheit(en) 201 zum Bewegen von Fracht an eine Steuereinheit 205 durch eine Kontrollbedieneinheit 202; in Schritt 502 erfolgt ein Senden der Befehle zum Steuern der Kraftantriebseinheit(en) 201 zum Bewegen der Fracht an die jeweilige(n) Kraftantriebseinheit(en) 201; schließlich wird dann die Fracht bzw. der Frachtcontainer gemäß des gesendeten Befehls zur Steuerung der Kraftantriebseinheit(en) 201 durch die Kraftantriebseinheit(en) 201 bewegt (siehe Schritt 503).

Obwohl die Erfindung unter Bezugnahme auf Ausführungsbeispiele beschrieben wurde, können verschiedene Änderungen und Modifikationen vorgenommen werden, ohne den Schutzbereich der Erfindung zu verlassen. Die Frachtladesysteme gemäß der Erfindung können zum Laden von jeglichen Transportmitteln mit Fracht, wie Fahrzeugen, Flugzeugen, Helikoptern, Wasser- oder Schienenfahrzeugen verwendet werden.

Ergänzend ist darauf hinzuweisen, dass "umfassend" oder "aufweisend" keine anderen Elemente oder Schritte ausschließt, und "eine" oder "ein" keine Vielzahl ausschließt. Insbesondere kann das Frachtladesystem beispielsweise also mehr als eine Kraftantriebseinheit, mehr als eine Kontrollbedieneinheit, mehr als eine Ladeeinheit, mehr als eine Steuereinheit, mehr als eine Antenne und mehr als ein Datenbus aufweisen.

Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Frachtladesystem (200) für ein Transportmittel, das Frachtladesystem (200) aufweisend:
eine Kraftantriebseinheit (201) zum Bewegen von Fracht in einem Frachtraum (111) eines Transportmittels;
eine tragbare Kontrollbedieneinheit (202);
eine Steuereinheit (205);
**dadurch gekennzeichnet, dass** das Frachtladesystem weiterhin aufweist eine Ladeeinheit (218), die an die Steuereinheit (205) gekoppelt ist und zur Versorgung der Kontrollbedieneinheit (202) mit Energie ausgeführt ist;
wobei die Kontrollbedieneinheit (202) zum Steuern der gesamten Bewegung der Fracht durch die Kraftantriebseinheit (201) ausgeführt ist;
wobei die Kontrollbedieneinheit (202) zur drahtlosen Übermittlung von Befehlen zum Steuern der Kraftantriebseinheit (201) an die Steuereinheit (205) ausgeführt ist;
wobei die Kontrollbedieneinheit (202) derart ausgeführt ist, dass sie sich über die Ladeeinheit (218) für den Frachtraum (111) konfiguriert, wobei die Ladeeinheit (218) der Kontrollbedieneinheit (202) mitteilt, für welchen Bedienbereich die Kontrollbedieneinheit (202) zuständig ist.

2. Frachtladesystem (200) nach Anspruch 1, weiterhin aufweisend:
eine Mehrzahl an Kraftantriebseinheiten (201);
wobei die Kontrollbedieneinheit (202) zum Steuern aller Kraftantriebseinheiten (201) ausgeführt ist.

3. Frachtladesystem (200) nach einem der vorhergehenden Ansprüche,
wobei die Kontrollbedieneinheit (202) relativ zu dem Frachtraum (111) beweglich ist.

4. Frachtladesystem (200) nach einem der vorhergehenden Ansprüche,
wobei die Kontrollbedieneinheit (202) zur drahtlosen Übermittlung von Befehlen zum Steuern der Kraftantriebseinheit (201) an die Kraftantriebseinheit (201) ausgeführt ist.

5. Frachtladesystem (200) nach einem der vorhergehenden Ansprüche, weiterhin aufweisend:
eine Konfigurationseinheit (204),
wobei die Konfigurationseinheit (204) mit der Kontrollbedieneinheit (202) zum Konfigurieren der Kommunikation zur Steuerung der Kraftantriebseinheiten (201) koppelbar ausgeführt ist.

6. Frachtladesystem (200) nach einem der vorhergehenden Ansprüche,
wobei die Steuereinheit (205) mit der Kraftantriebseinheit (201) verbunden ist; wobei die Steuereinheit (205) zur Kommunikation mit der Kontrollbedieneinheit (202) zur Übermittlung von Steuerbefehlen für die Kraftantriebseinheit (201) ausgeführt ist.

7. Frachtladesystem (200) nach einem der vorhergehenden Ansprüche, weiterhin aufweisend:
zumindest eine Antenne (215);
wobei die Kontrollbedieneinheit (202) zur Übermittlung von Informationen zum Bedienen der Kraftantriebseinheit (201) an die Antenne (215) in dem Frachtraum (111) ausgeführt ist;
wobei die Antenne (215) zum Übermitteln dieser Informationen an die Ladeeinheit (218) ausgeführt ist;
wobei die Ladeeinheit (218) zum Übermitteln dieser Information an die Steuereinheit (205) ausgeführt ist;
wobei die Steuereinheit (205) zum Übermitteln dieser Informationen an die Kraftantriebseinheit (201) ausgeführt ist.

8. Frachtladesystem (200) nach einem der vorhergehenden Ansprüche, weiterhin aufweisend:
einen Datenbus (206);
wobei die Kraftantriebseinheit (201) mit der Steuereinheit (205) mittels des Datenbusses (206) gekoppelt ist.

9. Frachtladesystem (200) nach Anspruch 8, wobei der Datenbus (206) als CAN Bus ausgeführt ist.

10. Frachtladesystem (200) nach einem der vorhergehenden Ansprüche,
wobei die Steuereinheit (205) als zentrale Energieversorgungseinheit zur Energieversorgung der Kraftantriebseinheiten (201) ausgeführt ist.

11. Frachtladesystem (200) nach einem der vorhergehenden Ansprüche,
wobei sämtliche innerhalb des Frachtraums (111) vorgesehenen Kraftantriebseinheiten (201) durch eine einzelne Kontrollbedieneinheit (202) steuerbar sind.

12. Transportmittel mit einem Frachtladesystem (200) nach einem der vorhergehenden Ansprüche.

13. Transportmittel mit einem Frachtladesystem (200) nach einem der Ansprüche 1 bis 11;
wobei das Transportmittel ein Luftfahrzeug (400) ist.

14. Verfahren zum Laden eines Frachtraumes (111) eines Transportmittels mit Fracht, das Verfahren aufweisend den Schritt:
Versorgung einer tragbaren Kontrollbedieneinheit (202) mit Energie durch eine Ladeeinheit (218) in einem Frachtraum (111) eines Transportmittels;
Konfiguration der Kontrollbedieneinheit (202) für den Frachtraum (111) über die Ladeeinheit (218), wobei die Ladeeinheit (218) der Kontrollbedieneinheit (202) mitteilt, für welchen Bedienbereich die Kontrollbedieneinheit (202) zuständig ist;
Steuern der gesamten Bewegung der Fracht in dem Frachtraum (111) des Transportmittels mit einer Kraftantriebseinheit (201) zum Bewegen der Fracht durch die Kontrollbedieneinheit (202, 400);
Drahtloses Übermitteln von Befehlen zum Steuern der Kraftantriebseinheit (201) an eine Steuereinheit (205) durch die Kontrollbedieneinheit (202).

## Claims

1. Cargo loading system (200) for a means of transport, the cargo loading system (200) comprising:
a power drive unit (201) for moving cargo in a cargo hold (111) of a means of transport;
a portable control unit (202);
a configuration unit (205)
**characterized in that** the cargo loading system further comprises;
a loading unit (218), which is coupled to the configuration unit (205) and which is adapted for supply of the control unit (202) with energy;
wherein the control unit (202) is configured to control the entire movement of the cargo by the power drive unit (201);
wherein the control unit (202) is configured for wireless transmission of commands for controlling the power drive unit to the control unit;
wherein the control unit (202) is designed such that it configures itself over the loading unit (218) for the cargo hold (111), wherein the loading unit (218) communicates to the control unit (202) for which operating area it is responsible.

2. Cargo loading system (200) according to claim 1, further comprising:
a plurality of power drive units (201);
wherein the control unit (202) is configured to control all power drive units (201).

3. Cargo loading system (200) according to one of the proceeding claims, wherein the control unit (202) is movable relative to the cargo hold (111).

4. Cargo loading system (200) according to one of the preceding claims, wherein the control unit (202) is configured to wirelessly transmit commands for controlling the power drive unit (201) to the power drive unit (201).

5. Cargo loading system (200) according to one of the preceding claims, further comprising:
a configuration unit (204);
wherein the configuration unit (204) is configured to be coupled to the control unit (202) to configure the communication for controlling the power drive units (201).

6. Cargo loading system (200) according to one of the preceding claims, wherein the configuration unit (205) is connected to the power drive unit (201); wherein the configuration unit (205) is configured to communicate with the control unit (202) to transmit control commands for the power drive units (201).

7. Cargo loading system (200) according to one of the preceding claims , further comprising:
at least one antenna (215);
wherein the control unit (202) is configured to transmit information for the operation of the power drive unit (201) to the antenna (215) in the cargo hold (111);
wherein the antenna (215) is configured for transmission of the information to the loading unit (218);
wherein the loading unit (218) is configured for transmission of the information to the configuration unit (205);
wherein the configuration unit (205) is configured for transmission of the information to the power drive unit (201).

8. Cargo loading system (200) according to one of the preceding claims, further comprising:
a data bus (206);
wherein the power drive unit (201) is coupled to the configuration unit (205) by the data bus (206).

9. Cargo loading system (200) according to claim 8, wherein the data bus (206) is realized in the form of a CAN bus.

10. Cargo loading system (200) according to one of the preceding claims,
wherein the configuration unit (205) is realized in the form of a central power supply unit for the power supply of the power drive unit (201).

11. Cargo loading system (200) according to one of the preceding claims,
wherein all power drive units (201) provided within the cargo hold (111) are configured to be controlled with one individual control unit (202).

12. A means of transport with a cargo loading system (200) according to one of the preceding claims.

13. A means of transport with a cargo loading system (200) according to claims 1 to 11, wherein the means of transport is an aircraft.

14. A method for loading a cargo hold (111) of a means of transport with cargo, the method comprising:
supplying a portable control unit (202) with electrical power through a loading unit (218) in a cargo hold (111) of a means of transport;
configuring of the control unit (202) via the loading unit (218) to the control unit (202), wherein the control unit (202) communicates for which operating area the control unit is responsible;
controlling the entire movement of the cargo in the cargo hold (111) of the means of transport with a power drive unit (201) for moving the freight via the control unit (202, 400);
wirelessly transmitting of commands for controlling the power drive unit (201) to a configuration unit (205) by the control unit (202).

## Revendications

1. Système de chargement de fret (200) pour un moyen de transport, le système de chargement de fret (200) présentant :
une unité d'entraînement motorisé (201) destinée à déplacer du fret dans une soute (111) d'un moyen de transport ;
une unité de manoeuvre contrôlée portable (202) ;
une unité de commande (205) ;
**caractérisé en ce que** le système de chargement de fret présente en outre :
une unité de chargement (218), couplée à l'unité de commande (205) et réalisée pour alimenter l'unité de manoeuvre contrôlée (202) en énergie ;
l'unité de manoeuvre contrôlée (202) étant réalisée pour commander l'ensemble du déplacement du fret par l'unité d'entraînement motorisé (201) ;
l'unité de manoeuvre contrôlée (202) étant réalisée pour transmettre sans fil des ordres de commande de l'unité d'entraînement motorisé (201) à l'unité de commande (205) ;
l'unité de manoeuvre contrôlée (202) étant réalisée de manière à être configurée par l'intermédiaire de l'unité de chargement (218) pour la soute (111), l'unité de chargement (218) communiquant à l'unité de manoeuvre contrôlée (202) pour quelle zone de manoeuvre l'unité de manoeuvre contrôlée (202) est compétente.

2. Système de chargement de fret (200) selon la revendication 1, présentant en outre :
une pluralité d'unités d'entraînement motorisé (201) ;
dans lequel l'unité de manoeuvre contrôlée (202) est réalisée pour commander toutes les unités d'entraînement motorisé (201).

3. Système de chargement de fret (200) selon une des revendications précédentes,
dans lequel l'unité de manoeuvre contrôlée (202) est mobile par rapport à la soute (111).

4. Système de chargement de fret (200) selon une des revendications précédentes, dans lequel l'unité de manoeuvre contrôlée (202) est réalisée pour transmettre sans fil des ordres de commande de l'unité d'entraînement motorisé (201) à l'unité d'entraînement motorisé (201).

5. Système de chargement de fret (200) selon une des revendications précédentes, présentant en outre :
une unité de configuration (204),
dans lequel l'unité de configuration (204) est réalisée de manière couplable à l'unité de manoeuvre contrôlée (202) pour configurer la communication destinée à commander les unités d'entraînement motorisé (201).

6. Système de chargement de fret (200) selon une des revendications précédentes,
dans lequel l'unité de commande (205) est reliée à l'unité d'entraînement motorisé (201) ;
l'unité de commande (205) étant réalisée pour communiquer avec l'unité de manoeuvre contrôlée (202) afin de transmettre des ordres de commande pour l'unité d'entraînement motorisé (201).

7. Système de chargement de fret (200) selon une des revendications précédentes, présentant en outre :
au moins une antenne (215) ;
dans lequel l'unité de manoeuvre contrôlée (202) est réalisée pour transmettre à l'antenne (215) dans la soute (111) des informations destinées à manoeuvrer l'unité d'entraînement motorisé (201) ;
l'antenne (215) étant réalisée pour transmettre ces informations à l'unité de chargement (218) ;
l'unité de chargement (218) étant réalisée pour transmettre ces informations à l'unité de commande (205) ;
l'unité de commande (205) étant réalisée pour transmettre ces informations à l'unité d'entraînement motorisé (201).

8. Système de chargement de fret (200) selon une des revendications précédentes, présentant en outre :
un bus de données (206) ;
dans lequel l'unité d'entraînement motorisé (201) est couplée à l'unité de commande (205) au moyen du bus de données (206).

9. Système de chargement de fret (200) selon la revendication 8,
dans lequel le bus de données (206) est réalisé sous la forme d'un bus CAN.

10. Système de chargement de fret (200) selon une des revendications précédentes, dans lequel l'unité de commande (205) est réalisée sous la forme d'une unité centrale d'alimentation en énergie pour alimenter en énergie les unités d'entraînement motorisé (201).

11. Système de chargement de fret (200) selon une des revendications précédentes,
dans lequel toutes les unités d'entraînement motorisé (201) prévues à l'intérieur de la soute (111) peuvent être commandées par une seule unité de manoeuvre contrôlée (202).

12. Moyen de transport comportant un système de chargement de fret (200) selon une des revendications précédentes.

13. Moyen de transport comportant un système de chargement de fret (200) selon une des revendications 1 à 11 ;
dans lequel le moyen de transport est un aéronef (400).

14. Procédé de chargement d'une soute (111) d'un moyen de transports avec du fret, le procédé présentant les étapes consistant à :
alimenter en énergie une unité de manoeuvre contrôlée portable (202) par l'intermédiaire d'une unité de chargement (218) dans une soute (111) d'un moyen de transport ;
configurer l'unité de manoeuvre contrôlée (202) pour la soute (111) par le biais de l'unité de chargement (218), l'unité de chargement (218) communiquant à l'unité de manoeuvre contrôlée (202) pour quelle zone de manoeuvre l'unité de manoeuvre contrôlée (202) est compétente ;
commander l'ensemble du déplacement du fret dans la soute (111) du moyen de transport avec une unité d'entraînement motorisé (201) pour déplacer le fret par l'intermédiaire de l'unité de manoeuvre contrôlée (202, 400) ;
transmettre sans fil des ordres de commande de l'unité d'entraînement motorisé (201) à une unité de commande (205) par l'intermédiaire de l'unité de manoeuvre contrôlée (202).
